# EUROPÄISCHE PATENTSCHRIFT

(11) **EP 2 370 256 B1**
(45) Veröffentlichungstag und Bekanntmachung des Hinweises auf die Patenterteilung: **02.11.2016**
(21) Anmeldenummer: 09753129.7
(22) Anmeldetag: 20.11.2009
(51) Int. Cl.: B32B 37/12, B32B 15/08, B32B 5/18, B05B 3/10

(54) **VERFAHREN ZUR HERSTELLUNG VON VERBUNDELEMENTEN**
METHOD FOR PRODUCING COMPOSITE ELEMENTS
PROCÉDÉ DE FABRICATION D'ÉLÉMENTS COMPOSITES

(30) Priorität: 28.11.2008 EP 08170227
(43) Veröffentlichungstag der Anmeldung: 05.10.2011
(60) Teilanmeldung: 11185901.3
(73) Patentinhaber: BASF SE, 67056 Ludwigshafen am Rhein (DE)
(72) Erfinder: SCHMIT, Ansgar, 49078 Osnabrück (DE); HENSIEK, Rainer, 49328 Melle (DE); GRAALMANN, Onno, 49152 Bad Essen (DE); GRAMLICH, Simon, 70178 Stuttgart (DE)
(74) Vertreter: BASF IP Association
(86) Internationale Anmeldenummer: PCT/EP2009/065536
(87) Internationale Veröffentlichungsnummer: WO 2010/060864

(56) Entgegenhaltungen:
- WO-A-2006/120234
- GB-A- 2 201 907
- SU-A1- 1 219 153
- US-A- 2 220 275

## Beschreibung

Gegenstand der Erfindung ist ein Verfahren zur Herstellung von Verbundelementen.

Als Verbundelemente im Sinne der vorliegenden Erfindung sind flächenförmige Gebilde, bestehend aus mindestens einer Deckschicht und einer fest mit dieser verbundenen Schicht.

Ein Beispiel für derartige Verbundelemente sind solche mit einem Kern aus Polyurethan- oder Polyisocyanuratschaum und Deckschichten aus Metall, wie beispielsweise in EP 1 516 720 beschrieben. Diese Verbundelemente werden häufig auch als Sandwich-Elemente bezeichnet. Ein weiteres Beispiel sind Verbundelemente aus mindestens einer Deckschicht und einem vorgefertigten Kern aus einem Wärmedämmmaterial, beispielsweise Mineralwolle oder einem organischen Dämmmaterial, wie Kunststoffschaum, beispielsweise Polyurethanschaum oder Polystyrolschaum, wie beispielsweise in WO 2006/120234 beschrieben. Ein weiteres Beispiel sind sogenannte Leichtbauplatten, bestehend aus zwei Deckschichten, vorzugsweise aus Holz, Sperrholz, Spanplatten, Metall oder Kunststoff und einer Kernlage, vorzugsweise Waben-, Falt- oder Steckstrukturen, vorzugsweise aus Pappe, wie beispielsweise in WO 2007/093538 beschrieben. Im weitesten Sinne können die Verbundelemente auch kompakte Platten, wie Holz- oder Spanplatten sein, die mit Deckschichten aus Kunststoff, Furnier oder Metall beschichtet sind.

Bei der Herstellung der Verbundelemente ist es notwendig, eine feste Verbindung zwischen dem Kernmaterial und den Deckschichten herzustellen. Bei Verbundelementen mit einem vorgefertigten Kern erfolgt dies üblicherweise mittels Kleber. Bei Sandwichelementen erfolgt prinzipiell eine feste Haftung zwischen dem Schaum und den Deckschichten. Dennoch kann es zu Oberflächendefekten des Schaums bis hin zu seiner Ablösungen von der Deckschicht kommen. Daher ist es vorteilhaft, zwischen die Deckschicht und den Kern einen Haftvermittler aufzubringen, wie es in EP 1516720 beschrieben ist.

Zum Auftrag der Kleber beziehungsweise Haftvermittler gibt es unterschiedliche Möglichkeiten. Eine besonders vorteilhafte Auftragsart ist die mittels einer rotierenden Scheibe. Bei dieser Auftragsart kann ein gleichmäßiger Auftrag bewirkt werden, ohne dass es zur Bildung von Aerosolen kommt.

In WO 2006/29786 wird ein Verfahren zur Herstellung von Sandwichelementen beschrieben, bei dem der Haftvermittler mittels einer rotierenden Scheibe aufgetragen wird. Die Scheibe kann dabei flach und vorzugsweise oval oder sternförmig ausgestal-2 Bl. Figuren tet sein. In einer weiteren Ausgestaltung der Scheibe ist diese kaskadenartig ausgestaltet und mit Öffnungen zum Austrag des Haftvermittlers versehen.

In EP 1593438 wird eine Vorrichtung zur Herstellung von Sandwichelementen beschrieben, bei der ein Haftvermittler mittels eines rotierenden Tellers, in dem sich mindestens eine Öffnung befindet, auf die Deckschicht aufgebracht wird.

In WO 2006/120234 wird ein Verfahren zur Herstellung von Verbundelementen beschrieben, bei dem ein Kern auf einer Deckschicht verklebt wird. Der Auftrag des Klebers erfolgt ebenfalls mit einer rotierenden Scheibe wie in EP 1516720 beschrieben.

WO 2007/0936538 beschreibt ein Verfahren zur Herstellung von Leichtbauplatten, bei dem der Kleber ebenfalls mit einer rotierenden Scheibe wie in WO 2006/29786 beschrieben aufgebracht wird.

Die beschriebenen Scheiben haben jedoch auch Nachteile. Es zeigte sich, dass der Haftvermittler beziehungsweise Kleber eine sehr schnelle Aushärtung aufweisen muss, um optimal wirken zu können. Durch diese schnelle Reaktion des Materials baut sich schnell ausreagiertes Material auf der Scheibe auf. Dadurch wird das Verhalten bei den bekannten Scheiben negativ beeinflusst. So werden die Löcher in der Scheibe bereits nach kurzer Zeit verstopft und das Material wird unkontrolliert über den Scheibenrand abgeworfen. Dadurch wird die Verteilung ungleichmäßig, vor allem wird mehr Material in die Randbereiche geworfen. Die Tropfenbildung erfolgt dann nicht mehr nur nach dem Prinzip des Zerfalls laminarer Flüssigkeitsfäden, sondern auch durch Einzeltropfenablösung oder gar Lamellenzerfall. Die beiden letztgenannten Zerfallsmechanismen führen zu erheblich breiteren Tropfengrößenspektren. Daher ist die Tropfengröße nicht mehr definiert. Um eine optimal arbeitende Scheibe zu haben, muss die Scheibe, je nach Schnelligkeit des Klebers bereits nach 20 Minuten gewechselt werden. Dies würde ein Anlagenstopp hervorrufen.

Außerdem ist es mit den derzeitigen Scheiben kaum möglich, Kleber beziehungsweise Haftvermittler einzusetzen, die feste Füllstoffe enthalten.

Es war die Aufgabe der vorliegenden Erfindung, rotierende Scheiben zum Auftrag von Kleber beziehungsweise Haftvermittler auf Deckschichten / untere Flächen bereitzustellen, die einen gleichmäßigen Auftrag auch über eine lange Zeit, im folgenden als Standzeit bezeichnet, gewährleisten und mit denen auch Kleber mit festen Füllstoffen aufgetragen werden können.

Die Aufgabe konnte überraschenderweise gelöst werden durch die Verwendung einer Scheibe, die am Rand mit 20 bis 80 Zacken versehen ist, die spitz zulaufen.

Gegenstand der Erfindung ist demzufolge ein Verfahren zur Herstellung von Verbundelementen aus mindestens einer Deckschicht a) und einer fest mit dieser verbundenen Schicht b), wobei zwischen der Deckschicht a) und der fest mit dieser verbundenen Schicht b) ein Haftvermittler c) aufgebracht ist, wobei die Deckschicht a) kontinuierlich bewegt wird und der Haftvermittler c) und die fest mit dieser verbundenen Schicht b) beziehungsweise deren Ausgangsstoffe nacheinander auf die Deckschicht aufgebracht werden, wobei der Auftrag des Haftvermittlers c) mittels einer rotierenden Scheibe erfolgt, dadurch gekennzeichnet, dass die rotierende Scheibe am Rand mit 20 bis 80 Zacken versehen ist, die spitz zulaufen.

Gegenstand der Erfindung ist weiterhin eine Vorrichtung zur Herstellung von Verbundelementen aus mindestens einer Deckschicht a) und einer fest mit dieser verbundenen Schicht b), wobei zwischen der Deckschicht a) und der fest mit dieser verbundenen Schicht b) ein Haftvermittler c) aufgebracht ist, wobei die Deckschicht a) kontinuierlich bewegt wird und der Haftvermittler c) und die fest mit dieser verbundene Schicht b) beziehungsweise deren Ausgangsstoffe nacheinander auf die Deckschicht aufgebracht werden, wobei der Auftrag des Haftvermittlers c) mittels einer rotierenden Scheibe erfolgt, dadurch gekennzeichnet, dass die rotierende Scheibe am Rand mit 20 bis 80 Zacken versehen ist, die spitz zulaufen.

Breite, Anzahl und Zulaufwinkel der Zacken, werden so aufeinander abgestimmt, dass ein möglichst gleichmäßiger, fein verteilter Auftrag des Klebers auf die unterliegende Deckschicht / untere Fläche möglich ist.

Die Zacken können drei- oder viereckig sein und eine Breite von 0,5 - 40 mm und eine Länge von 0,1 bis 50 mm aufweisen. Die Zacken können alle die gleiche Geometrie aufweisen oder unterschiedliche Geometrien und Größen aufweisen. Die Zacken können waagerecht oder nach unten oder oben mit einem Winkel bis zu 90° angebracht sein.

Erfindungsgemäß sind die Zacken spitz zulaufend. In einer weiteren Ausführungsform der Erfindung sind die Zacken rechteckig oder trapezförmig ausgestaltet. Dabei ist wichtig, dass sich bei der Beaufschlagung mit Flüssigkeit an den Zacken Flüssigkeitsfäden bilden, deren Zerfall in Tropfen kontrollierbar ist und zu eng verteilten Tropfengrößenspektren führt.

Die Anzahl der Zacken ist unter anderem abhängig von der gewünschten Verteilung der Flüssigkeit auf der Deckschicht und der Stoffeigenschaften des Klebers, wie Dichte, Viskosität und Oberflächenspannung. Erfindungsgemäß weist die Scheibe 20 - 80, bevorzugt 40-60 Zacken auf.

Die Grundform der Scheibe ist vorzugsweise kreisrund. Es ist auch möglich, die Scheibe oval oder sternförmig zu gestalten. Es kann ebenso eine Geometrie verwendet werden, die die inneren vier Linien dreier sich schneidender Kreise beschreiben, die wie folgt angeordnet sind. Der innere Kreis hat seinen Mittelpunkt auf der Rotationsachse. Die beiden anderen Kreise mit größerem Durchmesser haben ihren Mittelpunkt auf einer Geraden, die durch die Rotationsachse führt und deren Radius größer ist als der Abstand zwischen Kreismittelpunkt und Rotationsachse und höchstens so groß, dass der kleinere Kreis gerade noch geschnitten wird. Der Rand zum erhöhten Abwurfbereich ist kreisrund und dient zur Vergleichmäßigung der Strömung. Der Durchmesser dieses Kreises sollte so groß gewählt werden wie möglich.

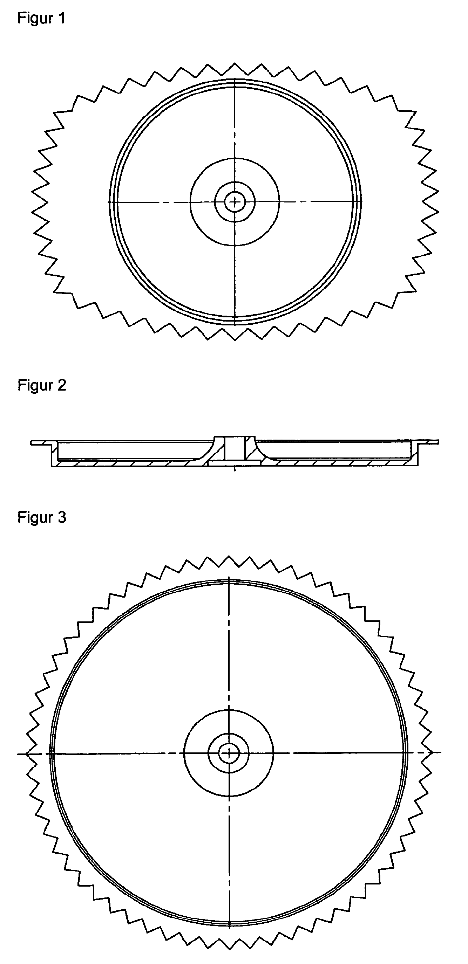

Eine solche Scheibe ist in Figur 1-3 dargestellt.

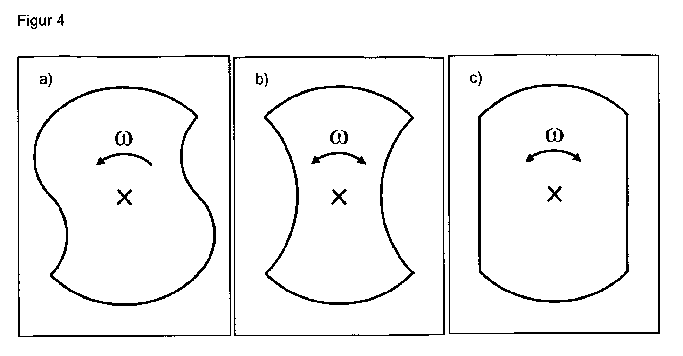

In Figur 4 werden weitere Geometrien der erfindungsgemäßen Scheibe dargestellt.

So können Scheiben S-förmiger Ausführung (Figur 4a), Scheiben mit konkaver (Figur 4b) oder gerader (Figur 4c) Grundform Anwendung finden. Der mit dem Symbol ω gekennzeichnete Pfeil in der Figur gibt jeweils die mögliche Drehrichtung der Scheibe an.

Wichtig ist hierbei, dass die Kontur nicht zu sehr von einem Kreis abweicht, da ansonsten der Kleber c) besonders an den Schnittkanten der Konturlinien nicht über jeweils eine Zacke einen Strahl bildet, sondern sich mehrere Strahlen zusammenschließen, was dann zu einem unsauberen Auftragsverhalten führt.

Die S-förmige Ausführung ermöglicht eine verhältnismäßig große Einbuchtung (Abweichung von der Kreisform), da die kritischen Stellen, an denen es zu Strahlzusammenführungen kommen kann, abgerundet sind. Diese Ausführung kann jedoch aus diesem Grund nur in eine Drehrichtung betrieben werden.

Eine weitere Ausführungsform kann eine Glocke sein, bei der das Material an der Unterseite des Apparats entlang zum Zerstäuberrand transportiert wird. Die folgenden Ausführungen gelten sowohl für Scheiben als auch für Glocken.

Das Längenverhältnis vom Durchmesser der Scheibe zu erhöhtem Rand beträgt vorzugsweise zwischen 5/1 und 100/1 bevorzugt etwa 20/1.

Die Scheibe weist, abhängig von der Breite der Deckschicht, auch als Bandbreite bezeichnet, einen Durchmesser zwischen 0,05 bis 0,4 m, bevorzugt 0,1 bis 0,3 m, besonders bevorzugt 0,12 - 0,25m, bei ovalen Scheiben bezogen auf die lange Seite der ovalen Form, auf. Das Verhältnis des Durchmessers der Scheibe zur Bandbreite beträgt 0,05 - 0,35.

Die Scheibe ist vorzugsweise in einer Höhe von 0,01 - 0,3 m, bevorzugt 0,03 - 0,18 m, besonders bevorzugt 0,03 - 0,15 m über der zu benetzenden Deckschicht angebracht.

Die rotierende Scheibe ist in der Waagerechten oder in einer geringen Abweichung von der Waagerechten von bis zu 15° bezogen auf die Deckschicht, angebracht.

Der Benetzungsradius des Haftvermittlers auf der unteren Deckschicht liegt vorzugsweise zwischen 0,05 - 1,5 m, bevorzugt 0,35 - 1,20 m. Bei breiteren Deckschichten besteht die Möglichkeit zwei oder mehrere Scheiben zu verwenden, die nebeneinander oder versetzt angeordnet sein können,

Die Drehzahl der Scheibe liegt vorzugsweise zwischen 200 - 2500 min-¹, besonders bevorzugt zwischen 200 - 2000 min⁻¹, und insbesondere zwischen 600 - 1200 min⁻¹. Eine Möglichkeit den Auftrag zu vergleichsmäßigen ist durch oszillieren der Drehzahl. Die Drehzahl wird dabei periodisch, kurzzeitig abgesenkt und wieder auf das Anfangsniveau angehoben. Durch die kurzzeitige Verringerung verkleinert sich die Wurfweite und führt zu einer Vergleichmäßigung des Auftragsbilds. Die Absenkung kann bis zu 10% von der ursprünglichen Drehzahl, bevorzugt zwischen 50% und 80% liegen.

Der zu verteilende Massenstrom liegt zwischen 10 g/min - 5kg/min, bevorzugt 200 g/min - 2 kg/min, besonders 400 g/min - 1,8 kg/min

In einer besonderen Ausführungsform der Erfindung sind mindestens zwei, höchstens 5, besonders bevorzugt zwei Scheiben übereinander angeordnet. Dabei ist der Durchmesser der oberen Scheibe vorzugsweise größer als der Durchmesser der unteren Scheibe, vorzugsweise in einem Verhältnis von oberer zu unterer Scheibe 1/0,8 - 1/10, bevorzugt 3/5. Zumindest ist die obere Scheibe, vorzugsweise sind alle Scheiben mit Zacken ausgestattet. Dabei können sämtliche oben genannten Formen kombiniert werden. Es kann ebenso ein Bauteil bestehend aus einer Scheibengeometrie an der Oberseite und einer Glockengeometrie an der Unterseite eingesetzt werden.

Der Vorteil der Verwendung mehrerer Scheiben ist, dass die Auftragsverteilung gleichmäßiger wird.

Bei übereinander angeordneten Scheiben wird der Kleber bevorzugt auf jede Scheibe einzeln aufgebracht. Dabei ist bei den oberen Scheiben ein konzentrischer Spalt als Öffnung zur Beschickung der unteren Scheiben vorzusehen. Der innere Radius des Spalts entspricht dem Wellendurchmesser. Das Verhältnis des äußeren Radius des Spalts zum Außenradius der entsprechenden Scheibe beträgt maximal 0,98, bevorzugt zwischen 0,2 und 0,5. Es kann aber auch nur eine Scheibe beschickt werden und die Verteilung auf die anderen Scheiben durch geeignete Einbauten wie Bohrungen oder Leitkanäle erfolgen. Die Anzahl der Löcher oder Leitkanäle beträgt 4 - 12, bevorzugt 4 - 8, besonders bevorzugt 4. Die Öffnungen weisen eine Querschnittsfläche von je 25-900 mm², bevorzugt 100 - 650 mm² besonders bevorzugt 100 - 400mm² auf. Bei Glocken wird das Material auf die Oberseite aufgetragen und durch oben beschriebene Leitkanäle auf die Unterseite transportiert.

Die Scheibe kann aus allen Materialien gefertigt werden, die sich dem Haftvermittler gegenüber inert verhalten. Bevorzugt sind Metalle oder Kunststoffe. Bevorzugt werden die Scheiben aus Kunststoffen gefertigt. Hierbei sind thermoplastische Kunststoffe, wie Polyolefine, Polystyrol, Polyamid, Teflon oder Polyacetale, wie Polyoxymethylen (POM) besonders bevorzugt.

Als Deckschicht a) können Holzplatten, Gipskartonplatten, Glasfliese, Aluminiumfolien, Aluminium-, Kupfer- oder Stahlbleche, bevorzugt Aluminiumfolien, Aluminium- oder Stahlbleche, besonders bevorzugt Stahlbleche verwendet werden. Die Stahlbleche können beschichtet oder unbeschichtet sein. Vorzugsweise werden sie nicht coronabehandelt.

Bei der Herstellung von Leichtbauplatten können als Deckschichten a) Holz- oder Spanplatten und als Schichten b) Wabenkörper, beispielsweise aus Holz oder Pappe, eingesetzt werden.

Als fest mit der Deckschicht a) verbundene Schichten b) können bei der Herstellung von Dämmplatten solche aus Dämmstoffen, wie Mineralwolle, geschäumtes Polystyrol oder Hartschaum auf Isocyanatbasis, auch als Polyurethan-Hartschaum bezeichnet, eingesetzt werden. Der Hartschaum auf Isocyanatbasis kann auch mit Isocyanuratgruppen modifiziert sein.

Bei der Verwendung von Hartschaum auf Isocyanatbasis als Schicht b) erfolgt die Herstellung der Verbundelemente zumeist kontinuierlich. Dabei werden die flüssigen Ausgangskomponenten des Hartschaumstoffs auf die Deckschicht a) aufgetragen, wo sie zum Schaum aushärten.

Bei der hierbei üblichen Verwendung von Blechen und Folien als Deckschichten werden diese nacheinander von einer Rolle abgecoilt, profiliert, erwärmt, gegebenenfalls coronabehandelt, um die Beschäumbarkeit mit Polyurethan zu erhöhen, mit dem Ausgangsmaterial für den Hartschaumstoff auf Isocyanatbasis b), häufig auch als PUR- bzw. PIR-System bezeichnet, beschäumt, im Doppelband ausgehärtet und letztlich auf die gewünschte Länge zugeschnitten.

Die Deckschicht wird vorzugsweise mit einer konstanten Geschwindigkeit von 2 - 25 m/min, besonders bevorzugt 2-15 m/min und insbesondere 3 - 12 m/min, besonders bevorzugt 3 - 9 m/min transportiert. Dabei befindet sich die Deckschicht zumindest ab dem Auftrag des PUR-Systems b), vorzugsweise während der gesamten Zeitdauer ab dem Aufbringen des Haftvermittlers in einer waagerechten Position. Der Haftvermittler kann auch aufgetragen werden wenn die Deckschicht in Transportrichtung leicht geneigt ist und somit nicht in der Waagerechten geführt wird.

Als Kleber können bei Herstellung von Leichtbauplatten oder Dämmplatten auf Basis von Mineralwolle oder Polystyrol übliche Ein- oder Zweikomponentenkleber eingesetzt werden.

Bei der kontinuierlichen Herstellung von Verbundelementen auf Basis von Hartschaum auf Isocyanatbasis werden vorzugsweise Haftvermittler c) auf Basis von Polyurethanen, insbesondere Zweikomponentensysteme, eingesetzt.
Der Auftrag des Haftvermittlers c) kann dabei prinzipiell an jeder Stelle des Prozesses zwischen Abcoilen der Deckschichten und Auftrag des PUR- bzw. PIR-Systems erfolgen.

Günstig ist dabei, wenn die Entfernung zwischen Auftrag des Haftvermittlers c) und Auftrag des PUR- bzw. PIR-Systems b) gering ist. Dadurch ist der Abfall, welcher durch dieses Verfahren zu Beginn und Ende sowie bei unvorhergesehenen Unterbrechungen des Produktionsprozesses entsteht, minimal.

Der Haftvermittler c) wird im Falle der Verwendung eines Zweikomponentensystems vor dem Aufbringen auf die rotierende Scheibe maschinell vermischt, wobei Hoch- oder Niederdruckmischer, vorzugsweise Niederdruckmischer, verwendet werden können, und über eine geeignete Austragsvorrichtung, beispielsweise ein nachgeschaltetes Rührorgan, auf die Scheibe aufgetragen. Wird die Scheibe nun mittels eines Antriebs in Rotation versetzt, erfolgt eine flächige Verteilung des Haftvermittlers c) auf die unter der Scheibe befindliche, kontinuierlich beförderte Deckschicht. Zum Vermischen und Auftrag des Haftvermittlers auf die Scheibe kann beispielsweise ein Rührorgan aus Kunststoff verwendet werden. Die Austragsmenge des Haftvermittlers c) wird so auf die Geschwindigkeit des kontinuierlich arbeitenden Doppelbandes abgestimmt, dass die gewünschte Auftragsmenge pro m² Blech realisiert werden kann.

Nach erfolgtem Auftrag des Haftvermittlers c) auf die untere Deckschicht erfolgt der Auftrag des Ausgangsmaterials für den Hartschaumstoff auf Isocyanatbasis b). Die Reaktivität des Haftvermittlers c) ist dabei so eingestellt, dass die Systeme b) und c) miteinander zur Reaktion kommen (die offene Zeit des Haftvermittlers c) zum Zeitpunkt des Auftrages von b) also noch nicht überschritten ist), und nach einer definierten Zeit aushärten.

Durch den Einsatz des Haftvermittlers c) kann die Doppelbandtemperatur auf 55°C abgesenkt werden.

Als Haftvermittler können die aus dem Stand der Technik bekannten Haftvermittler auf Polyurethanbasis eingesetzt werden. Diese sind im allgemeinen erhältlich durch Umsetzung von Polyisocyanaten mit Verbindungen mit zwei gegenüber Isocyanaten reaktiven Wasserstoffatomen, wobei das Umsetzungsverhältnis vorzugsweise so gewählt wird, dass im Reaktionsgemisch das Verhältnis von Anzahl an Isocyanatgruppen zu Anzahl an gegenüber Isocyanaten reaktiven Gruppen 0,8 bis 1,8 : 1, bevorzugt 1 bis 1,6 : 1 beträgt.

Als Polyisocyanate kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI).

Bevorzugt werden dabei die Isocyanate der BASF SE Lupranat^{®} M 50, Lupranat^{®} M 70 und Lupranat^{®} M 200 eingesetzt. In einer besonderen Ausführungsform sind die Isocyanate, welche zur Herstellung des Hartschaumstoffes auf Isocyanatbasis b) sowie des Haftvermittlers c) verwendet werden, identisch. In einer bevorzugten Ausführungsform wird Lupranat^{®} M 70 verwendet, in einer besonders bevorzugten Ausführungsform erfolgt der Einsatz von Lupranat^{®} M 200.

Als Verbindungen mit mindestens zwei gegenüber Isocyanat reaktiven Wasserstoffatomen kommen im allgemeinen solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen.

Vorzugsweise eingesetzt werden Polyetherole und/oder Polyesterole, besonders bevorzugt Polyetherpolyole. Die Hydroxylzahl der verwendeten Polyetherole und/oder Polyesterole beträgt vorzugsweise 25 bis 800 mg KOH/g, die Molekulargewichte sind im Allgemeinen größer als 400. Die Polyurethane können ohne oder mit Kettenverlängerungs- und/oder Vernetzungsmitteln hergestellt werden. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400, vorzugsweise von 60 bis 300, zum Einsatz.

Die Polyolkomponente des Haftvermittlers c) weist dabei vorzugsweise eine Viskosität von 100 - 1000 mPas, bevorzugt 100 - 800 mPas, besonders bevorzugt 150 - 400 mPas (25°C) auf.

Im Haftvermittler können gegebenenfalls additive oder reaktive Flammschutzmittel enthalten sein. Derartige Flammschutzmittel werden im Allgemeinen in einer Menge von 0,1 bis 30 Gew.-%, bezogen auf das Gesamtgewicht der Polyolkomponente, eingesetzt.

Der Umsetzung der Polyisocyanaten mit den Polyolen werden bevorzugt keine physikalischen Treibmittel zugegeben. Die verwendeten Polyole können jedoch noch Restwasser enthalten, welches als Treibmittel wirkt. Die resultierenden Polyurethanhaftvermittler, wie sie bevorzugt bei Einsatz von Hartschaumstoffe auf Isocyanatbasis als Schicht b) eingesetzt werden, weisen dadurch eine Dichte von 200 bis 1200 g/l, bevorzugt von 400 bis 1000 g/l, besonders bevorzugt von 450 bis 900 g/l auf.

Die für das erfindungsgemäße Verfahren eingesetzten Hartschaumstoffe auf Isocyanatbasis b) werden auf übliche und bekannte Weise durch Umsetzung von Polyisocyanaten mit Verbindungen mit mindestens zwei mit Isocyanatgruppen reaktiven Wasserstoffatomen in Anwesenheit von Treibmitteln, Katalysatoren und üblichen Hilfsund/oder Zusatzstoffen hergestellt. Zu den eingesetzten Ausgangsstoffen ist im Einzelnen folgendes zu sagen.

Als organische Polyisocyanate kommen vorzugsweise aromatische mehrwertige Isocyanate in Betracht.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethandiisocyanat (MDI) und die entsprechenden Isomerengemische, Mischungen aus 4,4'-und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylendiisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPas.

Als Verbindungen mit mindestens zwei gegenüber Isocyanatgruppen reaktiven Wasserstoffatomen b) kommen insbesondere Polyetheralkohole und/oder Polyesteralkohole mit OH-Zahlen im Bereich von 25 bis 800 mgKOH/g zum Einsatz.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyesterole haben zumeist eine Funktionalität von 1,5 - 4.

Insbesondere kommen Polyetherpolyole, die nach bekannten Verfahren, beispielsweise durch anionische Polymerisation von Alkylenoxiden an H-funktionellen Startsubstanzen in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startsubstanzen kommen insbesondere Verbindungen mit mindestens 3, vorzugsweise 4 bis 8 Hydroxylgruppen oder mit mindestens zwei primären Aminogruppen im Molekül zum Einsatz.

Als Startsubstanzen mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diamino-diphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 25 mg KOH/g bis 800 mg KOH/g und insbesondere 240 mg KOH/g bis 570 mg KOH/g.

Zu den Verbindungen mit mindestens zwei gegenüber Isocyanat reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Herstellung der Hartschaumstoffe wird üblicherweise in Anwesenheit von Treibmitteln, Katalysatoren, Flammschutzmitteln und Zellstabilisatoren sowie, falls erforderlich weiteren Hilfs- und/oder Zusatzstoffen durchgeführt.

Als Treibmittel kann Wasser verwendet werden, das mit Isocyanatgruppen unter Abspaltung von Kohlendioxid reagiert. In Kombination mit oder vorzugsweise an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Beispielhaft seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Die Polyurethan- oder Polyisocyanuratschaumstoffe enthalten üblicherweise Flammschutzmittel. Vorzugsweise werden bromfreie Flammschutzmittel eingesetzt. Besonders bevorzugt sind Phosphoratome enthaltende Flammschutzmittel, insbesondere werden Trischlorisopropylphosphat, Diethylethanphosphonat, Triethylphosphat und/oder Diphenylkresylphosphat eingesetzt.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind stark basische Amine, wie z. B. sekundäre aliphatische Amine, Imidazole, Amidine, sowie Alkanolamine, und/oder metallorganische Verbindungen, insbesondere solche auf Basis von Zinn.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" CarlHanser-Verlag München, 1. Auflage, 1966, 2. Auflage, 1983 und 3. Auflage, 1993.

Zur Herstellung der Hartschaumstoffe auf Isocyanatbasis werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich zwischen 100 und 220, vorzugsweise zwischen 115 und 180, liegt. Die Polyurethan-Hartschaumstoffe können diskontinuierlich oder kontinuierlich mit Hilfe bekannter Mischvorrichtungen hergestellt werden.

Bei der Herstellung von Polyisocyanuratschäumen kann auch mit einem Index von > 180, vorzugsweise 200 - 500, besonders bevorzugt 250 - 500, gearbeitet werden.

Die Vermischung der Ausgangskomponenten kann mit Hilfe bekannter Mischvorrichtungen erfolgen.

Üblicherweise werden die erfindungsgemäßen PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen mit den Treibmitteln, den Katalysatoren sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen vermischt werden.

Die Dichte der hierfür eingesetzten Hartschaumstoffe beträgt vorzugsweise 10 bis 400 kg/m³, vorzugsweise 20-200, insbesondere 30 bis 100 kg/m³.

Die Dicke der Verbundelemente liegt üblicherweise im Bereich zwischen 5 bis 250 mm.

Durch die erfindungsgemäßen Scheibengeometrien konnte die Standzeit trotz Aufbau von ausreagiertem Kleber auf der Scheibe deutlich verlängert werden. Überraschenderweise bleiben trotz des Materialaufbaus auf der Scheibe die Verteilung des Klebers auf der Deckschicht und die Tropfengröße nahezu unverändert. Überraschenderweise bleibt auch die Flugbahn der von der Scheibe abgeschleuderten Tropfen im Wesentlichen konstant. Ein weiterer Vorteil ist, dass bei den erfindungsgemäßen Scheibengeometrien der Rand der besprühten Fläche auf der Deckschicht klar abgegrenzt werden kann.

In Figur 2 wird der Schnitt durch eine Scheibe dargestellt.

Figur 3 zeigt die Sicht auf eine Scheibe.

## Patentansprüche

1. Verfahren zur Herstellung von Verbundelementen aus mindestens einer Deckschicht a) und einer fest mit dieser verbundenen Schicht b), wobei zwischen der Deckschicht a) und der fest mit dieser verbundenen Schicht b) ein Haftvermittler c) aufgebracht ist, wobei die Deckschicht a) kontinuierlich bewegt wird und der Haftvermittler c) und die fest mit dieser verbundene Schicht b) beziehungsweise deren Ausgangsstoffe nacheinander auf die Deckschicht aufgebracht werden, wobei der Auftrag des Haftvermittlers c) mittels einer rotierenden Scheibe erfolgt, **dadurch gekennzeichnet, dass** die rotierende Scheibe am Rand mit 20 bis 80 Zacken versehen ist, die spitz zulaufen.

2. Verfahren nach Anspruch 1, **dadurch gekennzeichnet, dass** die Anzahl der Zacken im Bereich von 40 bis 60 liegt.

3. Verfahren nach Anspruch 1, **dadurch gekennzeichnet, dass** die Zacken eine dreieckige Form haben.

4. Verfahren nach Anspruch 1, **dadurch gekennzeichnet, dass** die Zacken eine viereckige Form haben.

5. Verfahren nach Anspruch 1, **dadurch gekennzeichnet, dass** die Zacken waagerecht angebracht sein.

6. Verfahren nach Anspruch 1, **dadurch gekennzeichnet, dass** das Längenverhältnis vom Durchmesser der Scheibe zu erhöhtem Rand zwischen 5/1 und 100/1 beträgt.

7. Verfahren nach Anspruch 1, **dadurch gekennzeichnet, dass** mindestens zwei, höchstens 5, Scheiben übereinander angeordnet sind.

8. Verfahren nach Anspruch 1, **dadurch gekennzeichnet, dass** die Scheibe in einer Höhe von 0,02 - 0,2 m über der Deckschicht a) angebracht ist.

9. Verfahren nach Anspruch 1, **dadurch gekennzeichnet, dass** der Benetzungsradius des Haftvermittlers c) auf der Deckschicht a) zwischen 0,25 - 1,5 m liegt.

10. Verfahren nach Anspruch 1, **dadurch gekennzeichnet, dass** die Drehzahl der Scheibe zwischen 200 - 2500 min⁻¹ liegt.

11. Verfahren nach Anspruch 1, **dadurch gekennzeichnet, dass** die Drehzahl periodisch, kurzzeitig abgesenkt und wieder auf das Anfangsniveau angehoben wird.

12. Verfahren nach Anspruch 1, **dadurch gekennzeichnet, dass** als Haftvermittler c) ein reaktives Ein- oder Mehrkomponenten Polyurethansystem eingesetzt wird.

13. Verfahren nach Anspruch 1, **dadurch gekennzeichnet, dass** der Haftvermittler c) seine offene Zeit zum Zeitpunkt des Auftrages des Ausgangsmaterials für den Hartschaumstoff auf Isocyanatbasis b) auf die untere Deckschicht noch nicht überschritten hat.

14. Verfahren nach Anspruch 1, **dadurch gekennzeichnet, dass** der Haftvermittler c) kein physikalisches Treibmittel enthält.

15. Verfahren nach Anspruch 1, **dadurch gekennzeichnet, dass** die Hartschaumstoffe auf Isocyanatbasis b) Polyurethan- oder Polisocyanurat-Schaumstoffe sind.

16. Verfahren nach Anspruch 1, **dadurch gekennzeichnet, dass** der Haftvermittler c) eine Rohdichte von 200 - 1200 g/L aufweist

17. Verfahren nach Anspruch 1, **dadurch gekennzeichnet, dass** als Deckschicht Holz, Gipskartonplatten, Glasfliese, Aluminiumfolien, Aluminium-, Kupfer-, oder Stahlbleche, bevorzugt Aluminiumfolien, Aluminium- oder Stahlbleche verwendet werden.

18. Verfahren nach Anspruch 1, **dadurch gekennzeichnet, dass** als Deckschicht Aluminiumfolien, Aluminium- oder Stahlbleche, bevorzugt Aluminiumfolien, Aluminium- oder Stahlbleche verwendet werden.

19. Vorrichtung zur Herstellung von Verbundelementen aus mindestens einer Deckschicht a) und einer fest mit dieser verbundenen Schicht b), wobei zwischen der Deckschicht a) und der fest mit dieser verbundenen Schicht b) ein Haftvermittler c) aufgebracht ist, wobei die Deckschicht a) kontinuierlich bewegt wird und der Haftvermittler c) und die fest mit dieser verbundene Schicht b) beziehungsweise deren Ausgangsstoffe nacheinander auf die Deckschicht aufgebracht werden, wobei der Auftrag des Haftvermittlers c) mittels einer rotierenden Scheibe erfolgt, **dadurch gekennzeichnet, dass** die rotierende Scheibe am Rand mit 20 bis 80 Zacken versehen ist, die spitz zulaufen.

## Claims

1. A method for the production of composite elements comprising at least one outer layer a) and a layer b) firmly bonded to it, an adhesion promoter c) being applied between the outer layer a) and the layer b) firmly bonded to it, the outer layer a) being continuously moved and the adhesion promoter c) and the layer b) firmly bonded to it or the starting materials thereof being applied in succession to the outer layer, the application of the adhesion promoter c) being effected by means of a rotating disk, wherein the rotating disk is provided with 20 to 80 teeth which taper to a point on the edge.

2. The method according to claim 1, wherein the number of teeth is in the range from 40 to 60.

3. The method according to claim 1, wherein the teeth have a triangular shape.

4. The method according to claim 1, wherein the teeth have a tetragonal shape.

5. The method according to claim 1, wherein the teeth are mounted horizontally.

6. The method according to claim 1, wherein the length ratio of the diameter of the disk to elevated edge is from 5/1 to 100/1.

7. The method according to claim 1, wherein at least two, at most 5, disks are arranged one on top of the other.

8. The method according to claim 1, wherein the disk is mounted at a height of 0.02-0.2 m above the outer layer a).

9. The method according to claim 1, wherein the wetting radius of the adhesion promoter c) on the outer layer a) is 0.25 - 1.5 m.

10. The method according to claim 1, wherein the rotational speed of the disk is 200-2500 min⁻¹.

11. The method according to claim 1, wherein the rotational speed is periodically briefly reduced and increased again to the initial level.

12. The method according to claim 1, wherein the adhesion promoter c) used is a reactive one-component or multicomponent polyurethane system.

13. The method according to claim 1, wherein the adhesion promoter c) has not yet exceeded its open time at the time of application of the starting material for the isocyanate-based rigid foam b) to the lower outer layer.

14. The method according to claim 1, wherein the adhesion promoter c) comprises no physical blowing agent.

15. The method according to claim 1, wherein the isocyanate-based rigid foams b) are polyurethane or polyisocyanurate foams.

16. The method according to claim 1, wherein the adhesion promoter c) has a gross density of 200-1200 g/l.

17. The method according to claim 1, wherein wood, sandwich-type plasterboards, glass tiles, aluminum foils, aluminum, copper or steel sheets, preferably aluminum foils, aluminum or steel sheets, are used as the outer layer.

18. The method according to claim 1, wherein aluminum foils, aluminum or steel sheets, preferably aluminum foils, aluminum or steel sheets, are used as the outer layer.

19. An apparatus for the production of composite elements comprising at least one outer layer a) and a layer b) firmly bonded to it, an adhesion promoter c) being applied between the outer layer a) and the layer b) firmly bonded to it, the outer layer a) being continuously moved and the adhesion promoter c) and the layer b) firmly bonded to it or the starting materials thereof being applied in succession to the outer layer, the application of the adhesion promoter c) being effected by means of a rotating disk, wherein the rotating disk is provided with 20 to 80 teeth which taper to a point on the edge.

## Revendications

1. Procédé de fabrication d'éléments composites constitués par au moins une couche de recouvrement a) et une couche b) assemblée de manière fixe à celle-ci, un promoteur d'adhérence c) étant appliqué entre la couche de recouvrement a) et la couche b) assemblée de manière fixe à celle-ci, la couche de recouvrement a) étant déplacée en continu et le promoteur d'adhérence c) et la couche b) reliée de manière fixe à celle-ci ou leurs substances de départ étant appliqués consécutivement sur la couche de recouvrement, l'application du promoteur d'adhérence c) ayant lieu au moyen d'un disque rotatif, **caractérisé en ce que** le disque rotatif est pourvu de 20 à 80 dents sur le bord, les dents se terminant en pointe.

2. Procédé selon la revendication 1, **caractérisé en ce que** le nombre de dents se situe dans la plage de 40 à 60.

3. Procédé selon la revendication 1, **caractérisé en ce que** les dents présentent une forme triangulaire.

4. Procédé selon la revendication 1, **caractérisé en ce que** les dents présentent une forme quadrangulaire.

5. Procédé selon la revendication 1, **caractérisé en ce que** les dents sont agencées horizontalement.

6. Procédé selon la revendication 1, **caractérisé en ce que** le rapport des longueurs du diamètre du disque au bord relevé vaut entre 5/1 et 100/1.

7. Procédé selon la revendication 1, **caractérisé en ce qu'**au moins deux couches et au plus 5 couches sont disposées les unes au-dessus des autres.

8. Procédé selon la revendication 1, **caractérisé en ce que** le disque est disposé à une hauteur de 0,02-0,2 m au-dessus de la couche de recouvrement a).

9. Procédé selon la revendication 1, **caractérisé en ce que** le rayon de mouillage du promoteur d'adhérence c) sur la couche de recouvrement a) est compris entre 0,25 et 1,5 m.

10. Procédé selon la revendication 1, **caractérisé en ce que** la vitesse de rotation du disque est située entre 200-2500 min-¹.

11. Procédé selon la revendication 1, **caractérisé en ce que** la vitesse de rotation est abaissée périodiquement pendant un court laps de temps et à nouveau augmentée au niveau de départ.

12. Procédé selon la revendication 1, **caractérisé en ce qu'**un système réactif de polyuréthane à un ou plusieurs composants est utilisé comme promoteur d'adhérence c).

13. Procédé selon la revendication 1, **caractérisé en ce que** le promoteur d'adhérence c) n'a pas encore dépassé son temps ouvert à l'instant de l'application du matériau de départ pour la mousse dure à base d'isocyanate b) sur la couche de recouvrement.

14. Procédé selon la revendication 1, **caractérisé en ce que** le promoteur d'adhérence c) ne contient pas d'agent de gonflement physique.

15. Procédé selon la revendication 1, **caractérisé en ce que** les mousses dures à base d'isocyanate b) sont des mousses de polyuréthane ou de polyisocyanurate.

16. Procédé selon la revendication 1, **caractérisé en ce que** le promoteur d'adhérence c) présente une densité brute de 200 - 1200 g/L.

17. Procédé selon la revendication 1, **caractérisé en ce qu'**on utilise comme couche de recouvrement du bois, des plaques de plâtre cartonnées, de carreaux en verre, des feuilles en aluminium, des tôles en aluminium, en cuivre ou en acier, de préférence des feuilles en aluminium, des tôles en aluminium ou en acier.

18. Procédé selon la revendication 1, **caractérisé en ce qu'**on utilise comme couche de recouvrement des feuilles en aluminium, des tôles en aluminium ou en acier, de préférence des feuilles en aluminium, des tôles en alumium ou en acier.

19. Dispositif de fabrication d'éléments composites constitués par au moins une couche de recouvrement a) et une couche b) assemblée de manière fixe à celle-ci, un promoteur d'adhérence c) étant appliqué entre la couche de recouvrement a) et la couche b) assemblée de manière fixe à celle-ci, la couche de recouvrement a) étant déplacée en continu et le promoteur d'adhérence c) et la couche b) reliée de manière fixe à celle-ci ou leurs substances de départ étant appliqués consécutivement sur la couche de recouvrement, l'application du promoteur d'adhérence c) ayant lieu au moyen d'un disque rotatif, **caractérisé en ce que** le disque rotatif est pourvu de 20 à 80 dents sur le bord, les dents se terminant en pointe.
